# EUROPÄISCHE PATENTSCHRIFT

(11) **EP 2 643 112 B1**
(45) Veröffentlichungstag und Bekanntmachung des Hinweises auf die Patenterteilung: **01.01.2020**
(21) Anmeldenummer: 11843009.9
(22) Anmeldetag: 10.11.2011
(51) Int. Cl.: B22F 3/105, B29C 67/00

(54) **VERFAHREN ZUM SCHICHTWEISEN HERSTELLEN EINES BAUTEILS**
METHOD FOR THE LAYERED MANUFACTURING OF A STRUCTURAL COMPONENT
PROCÉDÉ DE FABRICATION D'UNE PIÈCE PAR COUCHES

(30) Priorität: 26.11.2010 DE 102010052724; 07.04.2011 DE 102011006941
(43) Veröffentlichungstag der Anmeldung: 02.10.2013
(73) Patentinhaber: MTU Aero Engines AG, 80995 München (DE)
(72) Erfinder: HESS, Thomas, 81541 München (DE); BAYER, Erwin, 85221 Dachau (DE)
(86) Internationale Anmeldenummer: PCT/DE2011/001966
(87) Internationale Veröffentlichungsnummer: WO 2012/069037

(56) Entgegenhaltungen:
- EP-A1- 1 234 625
- WO-A1-2011/110521
- DE-A1- 4 112 695
- DE-A1- 10 236 907
- DE-A1- 10 310 385
- DE-A1-102007 056 984
- DE-C1- 19 514 740
- US-A1- 2002 104 973
- W.S. PARK, M.Y. KIM, H.G. LEE, H.S. CHO, M.C. LEU: "In-process Layer Surface Inspection of SLA Products", SPIE, Bd. 3517, 1998, Seiten 70-78, XP002684003,
- A. LAMIKIZ, J.A. SANCHEZ, L.N. LOPEZ DE LACALLE, J.L. ARANA: "laser ploishing of parts built up by selective laser sintering", INTERNATIONAL JOURNAL OF MACHINE TOOLS & MANUFACTURE, Nr. 47, 2007, Seiten 2040-2050, XP002684004,
- SUMAN DAS: "Physical Aspects of Process Control in Selective Laser Sintering of Metals", ADVANCED ENGINEERING MATERIALS, Bd. 5, Nr. 3, 2003, Seiten 701-711, XP002684005,

## Beschreibung

Die vorliegende Erfindung schafft ein Verfahren zum schichtweisen Herstellen eines Bauteils.

Verfahren zum schichtweisen Herstellen eines Bauteils werden auch als generative Fertigungsverfahren oder Rapid-Prototyping-Verfahren bezeichnet. Beim Rapid-Prototyping-Verfahren werden Bauteile aus formlosen oder formneutralen Materialien erzeugt. Dies geschieht aufgrund von chemischen oder physikalischen Prozessen, welche mittels eines rechnerbasierten Datenmodells gesteuert werden. Rapid-Prototyping-Verfahren zeichnen sich dadurch aus, dass Bauteile innerhalb kürzester Zeit gefertigt werden können, insbesondere ohne zuvor aufwändige Werkzeuge zum Herstellen der Bauteile anfertigen zu müssen.

Aus der DE 103 10 385 A1 ist ein Verfahren und eine Vorrichtung zur Qualitätskontrolle bei pulverbasierten schichtaufbauenden Verfahren bekannt., wobei u.a. Gruben und Löcher mittels einer optischen Kontrolleinrichtung detektiert werden. Diese Stellen werden anschließend partiell nochmal mit Pulver beschichtet und ausgehärtet.

Aus der DE 10 2007 056 984 A1, US 2002/104973 A1 und DE 41 12 695 A1 sind zudem Vorrichtungen bekannt, wenigstens einen Parameter erfassen können, Vertiefungen Glätten können sowie eine Vertiefung Auffüllen können.

Ein Verfahren zum schichtweisen Herstellen eines Bauteils ist auch aus der EP 731743 B1 bekannt. Bei dem bekannten Verfahren werden Pulverschichten mittels eines Lasers gesintert. Beim Belichten einer jeweiligen Pulverschicht wird die thermische Abstrahlung erfasst. Die Laserleistung zum Belichten einer jeweiligen Pulverschicht wird in Abhängigkeit von der erfassten thermischen Abstrahlung angepasst. Dadurch sollen Fehlstellen in vorangegangenen Pulverschichten behoben werden.

Bei schichtweise hergestellten Bauteilen stellt sich - auch unter Anwendung des aus der EP 731743 B1 bekannten Fertigungsverfahrens - immer wieder das Problem, dass die Bauteile tiefe, enge Kammern aufweisen. Diese Kammern entstehen dadurch, dass Vertiefungen in einer vorangehenden, verfestigten Pulverschicht nicht oder nur unzureichend mit Pulver beim Auftragen einer nachfolgenden Pulverschicht aufgefüllt werden. Dies hat seine Ursache vielfach darin, dass die Vertiefungen schmäler als die maximale Pulverkorngröße oder aber mit Überhängen versehen sind.

Aufgabe der vorliegenden Erfindung ist es, ein Verfahren zum schichtweisen Herstellen eines Bauteils bereitzustellen, bei welchem das Auftreten der vorgenannten Kammern vermieden oder zumindest reduziert wird.

Diese Aufgabe wird gelöst durch ein Verfahren mit den Merkmalen des Patentanspruchs 1.

Demgemäß wird ein Verfahren zum schichtweisen Herstellen eines Bauteils aus Pulver, aufweisend folgende Schritte: Erfassen wenigstens eines Parameters einer Vertiefung in einer gebildeten Schicht des Bauteils; Glätten der Vertiefung, wenn der wenigstens eine Parameter einen vorbestimmten Wert übersteigt; und Auffüllen der geglätteten Vertiefung mit Pulver; bereitgestellt.

Ferner wird eine nicht zur Erfindung gehörende Vorrichtung zum schichtweisen Herstellen eines Bauteils aus Pulver, aufweisend: eine erste Einrichtung zum Erfassen wenigstens eines Parameters einer Vertiefung in einer gebildeten Schicht des Bauteils; eine zweite Einrichtung zum Glätten der Vertiefung, wenn der wenigstens eine Parameter einen vorbestimmten Wert übersteigt; und eine dritte Einrichtung zum Auffüllen der geglätteten Vertiefung mit Pulver; vorgestellt.

Die der vorliegenden Erfindung zugrunde liegende Idee besteht darin, Vertiefungen in einer gebildeten Schicht des Bauteils zu erfassen und zu glätten. Diese Glättung ist derart, dass die Vertiefung dann wieder mit Pulver aufgefüllt werden kann, das heißt, die geglättete Vertiefung ist breiter als die maximale Pulvergröße und ggf. von Überhängen befreit. Der Parameter wird dabei so gewählt, dass nicht jede Vertiefung geglättet wird, sondern nur die Vertiefungen geglättet werden, die beispielsweise schmäler sind als die maximale Pulverkorngröße oder einen Überhang aufweisen. Somit können die einleitend beschriebenen Kammern effizient vermieden werden.

Aus den Unteransprüchen ergeben sich vorteilhafte Ausgestaltungen der Erfindung.

Gemäß einer Ausgestaltung des erfindungsgemäßen Verfahrens beschreibt der wenigstens eine Parameter eine Tiefe der Vertiefung. Eine Tiefe der Vertiefung lässt sich einfacher messen als beispielsweise eine Breite der Vertiefung. Dies insbesondere, wenn zum Messen der Tiefe der Vertiefung ein Laser- oder Elektronenstrahl verwendet wird.

Gemäß einer weiteren Ausgestaltung des erfindungsgemäßen Verfahrens wird der Parameter in Abhängigkeit von einer Rückstrahlung eines die Vertiefung abtastenden Laserstrahls oder Elektronenstrahls ermittelt. Anhand der Rückstrahlung lässt sich mittels Triangulation einfach auf die Tiefe der Vertiefung schließen.

Gemäß einer weiteren Ausgestaltung des erfindungsgemäßen Verfahrens wird der Parameter in Abhängigkeit von einer Randstrahlung der Rückstrahlung ermittelt. Dadurch lässt sich der für die Triangulation erforderliche Winkel einfach messen.

Gemäß einer weiteren Ausgestaltung des erfindungsgemäßen Verfahrens wird die Vertiefung mittels eines Laserstrahls oder eines Elektronenstrahls geglättet. Demnach kommen dem Laser- oder Elektronenstrahl zweierlei Funktionen zu: Einerseits tastet er die Vertiefung für das Erfassen des wenigstens einen Parameters ab. Andererseits dient er dem Glätten der Vertiefung.

Gemäß einer weiteren Ausgestaltung des erfindungsgemäßen Verfahrens erfolgt das Glätten durch mehrfaches Aufschmelzen der Vertiefung. Dadurch wird die Vertiefung graduierlich geglättet. Damit ergibt sich ein kontrollierter Prozess, welcher einen begrenzten Energieeintrag erfordert.

Gemäß einer weiteren Ausgestaltung des erfindungsgemäßen Verfahrens wird ein Energieeintrag zum Aufschmelzen des die Vertiefung auffüllenden Pulvers größer gewählt als ein Energieeintrag in an die Vertiefung angrenzenden Bereichen. Da in der Vertiefung die Pulverschichtdicke höher ist als in angrenzenden Bereichen, kann hier auch ein höherer Energieeintrag notwendig werden.

Gemäß einer weiteren Ausgestaltung des erfindungsgemäßen Verfahrens wird der Parameter gleichzeitig mit dem Bilden der Schicht erfasst. Gemäß dieser Ausgestaltung kommen dem Laser- oder Elektronenstrahl gleich dreierlei Funktionen zu: erstens Erfassen des Parameters, zweitens Glätten der Vertiefung und drittens Bilden der Schicht. Dadurch kann das Verfahren sehr schnell ablaufen.

Gemäß einer weiteren Ausgestaltung des erfindungsgemäßen Verfahrens wird die Schicht durch Aufschmelzen einer ersten Pulverschicht, insbesondere mittels eines Laser- oder Elektronenstrahls, gebildet und/oder das Pulver zum Auffüllen der Vertiefung ist Teil einer zweiten, die erste Pulverschicht überdeckenden Pulverschicht. Von "Aufschmelzen" ist vorliegend auch ein "Sintern" umfasst. Gemäß dieser Ausgestaltung wird die Vertiefung gleichzeitig mit dem Bilden der zweiten Pulverschicht aufgefüllt, was effizient ist. Die erste und/oder zweite Pulverschicht kann mit einer Rakel aufgetragen werden.

Vorzugsweise werden bei dem erfindungsgemäßen Verfahren das Auftragen der ersten Pulverschicht, das Erfassen des wenigstens einen Parameters, das Glätten der Vertiefung und Auffüllen derselben mit Pulver mittels Auftragens der zweiten Pulverschicht auf die erste Pulverschicht solange wiederholt bis das fertige Bauteil gebildet ist. Mit "erster" Pulverschicht ist die jeweils vorangehende Schicht, mit "zweiter" Pulverschicht die jeweils nachfolgende Schicht gemeint.

Die Erfindung wird im Folgenden anhand von Ausführungsbeispielen unter Bezugnahme auf die beiliegenden Figuren der Zeichnung näher erläutert.

Von den Figuren zeigen:
- Figur 1: schematisch eine Vertiefung;
- Figur 2: schematisch eine nicht zur Erfindung gehörende Vorrichtung, die geeignet ist zum schichtweisen Herstellen eines Bauteils gemäß einem Ausführungsbeispiel der vorliegenden Erfindung;
- Figur 3: einen sich an Figur 2 anschließenden Verfahrenszustand bei einem Verfahren gemäß einem Ausführungsbeispiel der vorliegenden Erfindung;
- Figur 4: einen weiteren, sich an den Verfahrenszustand aus Figur 3 anschließenden Verfahrenszustand; und
- Figur 5: einen noch weiteren, sich an den Verfahrenszustand aus Figur 4 anschließenden Verfahrenszustand.

In den Figuren bezeichnen gleiche Bezugsziffern gleiche oder funktionsgleiche Komponenten, soweit nichts Gegenteiliges angegeben ist.

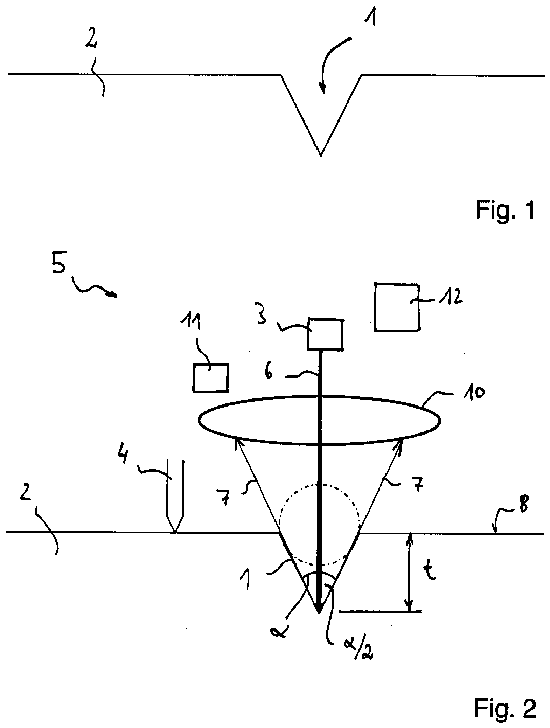

Figur 1 zeigt schematisch eine Vertiefung 1. Die Vertiefung 1 ist in einer Schicht 2 eines im Übrigen nicht weiter dargestellten Bauteilabschnitts ausgebildet. Die Schicht 2 ist dadurch gebildet, dass in einem vorangegangenen Verfahrensschritt eine erste Pulverschicht, beispielsweise Titanpulver, auf einen Tisch oder eine vorangegangene Schicht aufgetragen worden ist und diese anschließend mittels eines in Figur 2 dargestellten Lasers 3 aufgeschmolzen worden ist. Die Vertiefung 1 kann beispielsweise aufgrund eines ungleichmäßigen Auftrags der ersten Pulverschicht mittels der in Figur 2 angedeuteten Rakel 4 entstanden sein. Alternativ kann die Vertiefung einer mangelnden Qualität des Pulvers der ersten Pulverschicht geschuldet sein. Dies kann beispielsweise der Fall sein, wenn das Pulver Pulverkörner sehr unterschiedlicher Größe aufweist.

Figur 2 zeigt schematisch in einer Seitenansicht eine Vorrichtung 5 zum schichtweisen Herstellen eines Bauteils sowie die Schicht 2 mit der Vertiefung 1 aus Figur 1.

Die Vorrichtung 5 weist den bereits erwähnten Laser 3 auf, welcher einen Laserstrahl 6 erzeugt. Bei den im Zusammenhang mit Figur 1 beschriebenen Verfahrensschritten dient der Laserstrahl 6 dazu, die erste Pulverschicht aufzuschmelzen, um dadurch die Schicht 2 zu erzeugen. Danach oder bevorzugt gleichzeitig mit dem Aufschmelzen der ersten Pulverschicht zum Erzeugen der Schicht 2 wird auch die Oberflächengeometrie der gebildeten Schicht 2 (die dann noch als Schmelzbad vorliegt) erfasst. Insbesondere wird dabei die Eindringtiefe t des Laserstrahls 6 in die Schicht 2 bzw. in den abgetasteten Bauteilabschnitt (die Vertiefung 1 kann sich auch über mehrere Schichten 2 erstrecken) erfasst.

Bevorzugt wird die Eindringtiefe t dadurch gemessen, dass die Rückstrahlung 7, also die Reflexion des Laserstrahls 6 von der Oberfläche 8 der Schicht 2 bzw. der Vertiefung 1, in einem oder mehreren Sensoren 11 erfasst wird. Dabei wird bevorzugt die Randstrahlung von den Sensoren 11 erfasst. Die Sensoren 11 sind dazu hinter einer Linse 10 des Lasers 3 angeordnet. Auf Basis des Winkels, unter welchem die Randstrahlen 7 auf die Sensoren 11 auftreffen, kann auf den Winkel α geschlossen werden. Der Winkel α ist der Winkel zwischen zwei sich in einer Draufsicht aus Figur 2 diagonal gegenüberliegenden Randstrahlen 7. Genauso kann auch der Winkel α/2 gemessen werden, welcher der Winkel zwischen dem Laserstrahl 6 und einem der Randstrahlen 7 ist. Auf Basis des Winkels α kann wiederum die Eindringtiefe t ermittelt werden.

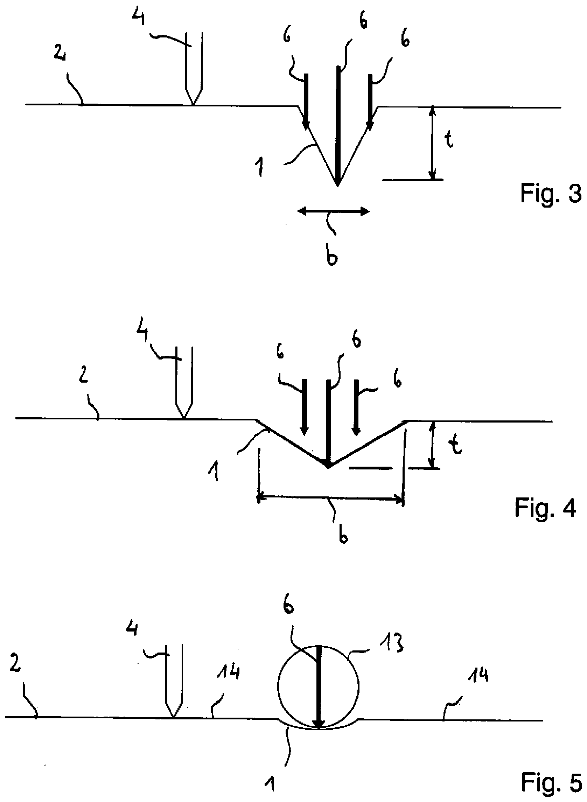

Stellt nun eine Steuereinrichtung 12 der Vorrichtung 5 fest, dass die Eindringtiefe t einen vorbestimmten Schwellwert überschreitet, so steuert diese den Laser 3 zum Glätten der Vertiefung 1, wie in Figur 3 dargestellt. Das Glätten wird dadurch erreicht, dass der Laserstrahl 6 mehrfach über die Vertiefung 1 streicht, wie in Figur 3 durch die drei Laserstrahlen 6 angedeutet, um dadurch das Material der Vertiefung 1 aufzuschmelzen. Das Material wird solange aufgeschmolzen, bis sich die Eindringtiefe t des Laserstrahls 6 reduziert. Dies geschieht insbesondere unter Zunahme einer Breite b der Vertiefung 1 aufgrund von nachfließenden Materials. Die Eindringtiefe t und gegebenenfalls die Breite b der Vertiefung 1 werden kontinuierlich von der Steuereinrichtung 12 überwacht. Das Glätten der Vertiefung 1 wird solange wiederholt, bis die Eindringtiefe t einen vorgegebenen Schwellwert unterschreitet. Zusätzlich oder alternativ kann das Glätten in Abhängigkeit von der Breite B erfolgen. Das Glätten bzw. mehrfache Aufschmelzen wird bevorzugt solange wiederholt, bis das größte in dem Pulver potentiell enthaltene Pulverkorn 13 in die Vertiefung 1 passt, wie in Figur 5 dargestellt.

In einem weiteren Verfahrensschritt wird nun weiteres Pulver mittels der Rakel 4 auf die bestehende Schicht 2 aufgetragen, um auf dieser eine weitere Pulverschicht zu erzeugen. Dabei füllen ein oder mehrere Pulverkörner 13 die geglättete Vertiefung 1 aus.

In einem weiteren Verfahrensschritt wird nun die weitere Pulverschicht umfassend die Pulverkörner 13 mittels des Laserstrahls 6 aufgeschmolzen. Im Bereich der Vertiefung 1 kann dabei die Laserleistung des Lasers 3 gegenüber umliegenden Bereichen 14 der weiteren Pulverschicht (nicht dargestellt) erhöht werden, was notwendig sein kann, um sämtliches Pulver 13 in der Vertiefung 1 aufzuschmelzen.

## Patentansprüche

1. Verfahren zum schichtweisen Herstellen eines Bauteils aus Pulver, aufweisend folgende Schritte:
Erfassen wenigstens eines Parameters (t) einer Vertiefung (1) in einer gebildeten Schicht (2) des Bauteils;
Glätten der Vertiefung (1), wenn der wenigstens eine Parameter (t) einen vorbestimmten Wert übersteigt; und
Auffüllen der geglätteten Vertiefung (1) mit Pulver (13).

2. Verfahren nach Anspruch 1,
**dadurch gekennzeichnet,**
**dass** der wenigstens eine Parameter (t) eine Tiefe der Vertiefung (1) beschreibt.

3. Verfahren nach Anspruch 1 oder 2,
**dadurch gekennzeichnet,**
**dass** der Parameter (t) in Abhängigkeit von einer Rückstrahlung (7) eines die Vertiefung (1) abtastenden Laserstrahls (6) oder Elektronenstrahls ermittelt wird.

4. Verfahren nach Anspruch 3,
**dadurch gekennzeichnet,**
**dass** der Parameter (t) in Abhängigkeit von einer Randstrahlung (7) der Rückstrahlung ermittelt wird.

5. Verfahren nach einem der vorangehenden Ansprüche,
**dadurch gekennzeichnet,**
**dass** die Vertiefung (1) mittels eines Laserstrahls (6) oder eines Elektronenstrahls geglättet wird.

6. Verfahren nach einem der vorangehenden Ansprüche,
**dadurch gekennzeichnet,**
**dass** das Glätten durch mehrfaches Aufschmelzen der Vertiefung (1) erfolgt.

7. Verfahren nach einem der vorangehenden Ansprüche,
**dadurch gekennzeichnet,**
**dass** ein Energieeintrag zum Aufschmelzen des die Vertiefung (1) auffüllenden Pulvers (13) größer gewählt wird als ein Energieeintrag in an die Vertiefung (1) angrenzenden Bereichen (14).

8. Verfahren nach einem der vorangehenden Ansprüche,
**dadurch gekennzeichnet,**
**dass** gleichzeitig mit dem Bilden der Schicht (2) der Parameter (t) erfasst wird.

9. Verfahren nach einem der vorangehenden Ansprüche,
**dadurch gekennzeichnet,**
**dass** die Schicht (2) durch Aufschmelzen einer ersten Pulverschicht, insbesondere mittels eines Laser- oder Elektronenstrahls (6), gebildet wird und/oder das Pulver (13) zum Auffüllen der Vertiefung (1) Teil einer zweiten, die erste Pulverschicht überdeckenden Pulverschicht ist.

## Claims

1. Method for the layered manufacturing of a component from powder, comprising the following steps:
detecting at least one parameter (t) of a recess (1) in a formed layer (2) of the component;
smoothing the recess (1) when the at least one parameter (t) exceeds a predetermined value; and
filling in the smoothed recess (1) with powder (13).

2. Method according to claim 1, **characterized in that** the at least one parameter (t) describes a depth of the recess (1).

3. Method according to either claim 1 or claim 2, **characterized in that** the parameter (t) is determined on the basis of a reflection (7) of a laser beam (6) or an electron beam that scans the recess (1).

4. Method according to claim 3, **characterized in that** the parameter (t) is determined on the basis of a peripheral radiation (7) of the reflection.

5. Method according to any of the preceding claims, **characterized in that** the recess (1) is smoothed by means of a laser beam (6) or an electron beam.

6. Method according to any of the preceding claims, **characterized in that** the smoothing is carried out by repeatedly melting the recess (1).

7. Method according to any of the preceding claims, **characterized in that** an energy input for melting the powder (13) filling the recess (1) is selected that is larger than an energy input into regions (14) adjoining the recess (1).

8. Method according to any of the preceding claims, **characterized in that** the parameter (t) is detected simultaneously with the formation of the layer (2).

9. Method according to any of the preceding claims, **characterized in that** the layer (2) is formed by melting a first powder layer, in particular by means of a laser or electron beam (6), and/or the powder (13) for filling the recess (1) is part of a second powder layer covering the first powder layer.

## Revendications

1. Procédé de fabrication par couches d'une pièce à base de poudre, comprenant les étapes suivantes :
détection d'au moins un paramètre (t) d'un évidement (1) dans une couche formée (2) de la pièce ;
lissage de l'évidement (1) si l'au moins un paramètre (t) dépasse une valeur prédéfinie ; et
remplissage de l'évidement (1) lissé avec de la poudre (13).

2. Procédé selon la revendication 1, **caractérisé en ce que** l'au moins un paramètre (t) décrit une profondeur de l'évidement (1).

3. Procédé selon la revendication 1 ou 2, **caractérisé en ce que** le paramètre (t) est déterminé en fonction de la réflexion (7) d'un faisceau laser (6) ou d'un faisceau électronique balayant l'évidement (1).

4. Procédé selon la revendication 3, **caractérisé en ce que** le paramètre (t) est déterminé en fonction du rayonnement marginal (7) de la réflexion.

5. Procédé selon l'une des revendications précédentes, **caractérisé en ce que** l'évidement (1) est lissé au moyen d'un faisceau laser (6) ou d'un faisceau électronique.

6. Procédé selon l'une des revendications précédentes, **caractérisé en ce que** le lissage est effectué par fusion multiple de l'évidement (1).

7. Procédé selon l'une des revendications précédentes, **caractérisé en ce qu'**un apport d'énergie servant à la fusion de la poudre (13) remplissant l'évidement (1) est choisi supérieur à un apport d'énergie dans les zones (14) adjacentes à l'évidement (1).

8. Procédé selon l'une des revendications précédentes, **caractérisé en ce que** le paramètre (t) est détecté simultanément avec la formation de la couche (2).

9. Procédé selon l'une des revendications précédentes, **caractérisé en ce que** la couche (2) est formée par fusion d'une première couche de poudre, en particulier au moyen d'un faisceau laser ou électronique (6), et/ou **en ce que** la poudre (13) servant à remplir l'évidement (1) fait partie d'une seconde couche de poudre recouvrant la première couche de poudre.
